# EUROPEAN PATENT APPLICATION

(11) **EP 4 650 550 A1**
(43) Date of publication of application: **19.11.2025**
(21) Application number: 24741198.6
(22) Date of filing: 08.01.2024
(51) Int. Cl.: E04H 4/16

(54) **ROBOTIC POOL CLEANER CONTROL METHOD AND COMPUTER READABLE STORAGE MEDIUM**

(30) Priority: 09.01.2023 CN 202310026024
(71) Applicant: Wybotics Co., Ltd, Tianjin 300462 (CN)
(72) Inventor: LI, Cheng, Tianjin 300462 (CN); GUAN, Shouqiang, Tianjin 300462 (CN)
(74) Representative: advotec.
(86) International application number: PCT/CN2024/071166
(87) International publication number: WO 2024/149199

(57) **Abstract**

The present application discloses a robotic pool cleaner control method. The method comprises: controlling a robotic pool cleaner to move to a first position on the pool wall of a pool, the first position being a position where the water line of the pool is located; controlling the robotic pool cleaner to rotate by a first angle, so as to adjust the included angle between the orientation of the top of the robotic pool cleaner and the vertical direction to be a target angle; and controlling the robotic pool cleaner to move in the horizontal direction with the first position as a starting point to clean the pool wall, wherein the included angle between the orientation of the top of the robotic pool cleaner and the vertical direction remains at the target angle in the process that the robotic pool cleaner moves in the horizontal direction.

## Description

### CROSS-REFERENCE TO RELATED APPLICATION

The present disclosure claims priority to Chinese Patent Application No. 2023100260243, filed on January 9, 2023, with the invention title "control method and device for pool cleaning robot, and pool cleaning robot", the entire content of which is incorporated into the present disclosure by reference.

### FIELD

The present disclosure relates to the field of robotics, and more particularly to a control method and a control device for a pool cleaning robot, and a pool cleaning robot.

### BACKGROUND

With the development of computer technology, robotics has also developed rapidly. For example, users use a floor cleaning robot to clean floors of houses, a window cleaning robot to clean windows of houses, and a pool cleaning robot to clean swimming pools, etc.

### SUMMARY

Embodiments of the present disclosure provide a control method and a control device for a pool cleaning robot, and a pool cleaning robot. The technical solution is as follows.

In an aspect, a control method for a pool cleaning robot is provided, which includes:
controlling a pool cleaning robot to move to a first position on a pool wall of a pool, in which the first position is a position where a water level line of the pool is located;
controlling the pool cleaning robot to rotate by a first angle to adjust an included angle between an orientation of a top of the pool cleaning robot and a vertical direction to a target angle; and
controlling the pool cleaning robot to move in a horizontal direction starting from the first position to clean the pool wall, in which the included angle between the orientation of the top of the pool cleaning robot and the vertical direction is maintained at the target angle during the horizontal movement of the pool cleaning robot.

In an aspect, a control device for a pool cleaning robot is provided, which includes:
a movement control module configured to control the pool cleaning robot to move to a first position on a pool wall of a pool, in which the first position is a position where a water level line of the pool is located; and
a rotation control module configured to control the pool cleaning robot to rotate by a first angle to adjust an included angle between an orientation of a top of the pool cleaning robot and a vertical direction to a target angle,
in which the movement control module is further configured to control the pool cleaning robot to move in a horizontal direction starting from the first position to clean the pool wall, and the included angle between the orientation of the top of the pool cleaning robot and the vertical direction is maintained at the target angle during the horizontal movement of the pool cleaning robot.

In an aspect, a pool cleaning robot is provided. The pool cleaning robot includes a robot controller, the robot controller includes one or more processors and one or more memories, the one or more memories store at least one computer program, and the at least one computer program is loaded by the one or more processors to execute following steps:
controlling a pool cleaning robot to move to a first position on a pool wall of a pool, in which the first position is a position where a water level line of the pool is located;
controlling the pool cleaning robot to rotate by a first angle to adjust an included angle between an orientation of a top of the pool cleaning robot and a vertical direction to a target angle; and
controlling the pool cleaning robot to move in a horizontal direction starting from the first position to clean the pool wall, in which the included angle between the orientation of the top of the pool cleaning robot and the vertical direction is maintained at the target angle during the horizontal movement of the pool cleaning robot.

In an aspect, a computer-readable storage medium is provided. The computer-readable storage medium stores at least one computer program, and the at least one computer program is loaded by a processor to execute following steps:
controlling a pool cleaning robot to move to a first position on a pool wall of a pool, in which the first position is a position where a water level line of the pool is located;
controlling the pool cleaning robot to rotate by a first angle to adjust an included angle between an orientation of a top of the pool cleaning robot and a vertical direction to a target angle; and
controlling the pool cleaning robot to move in a horizontal direction starting from the first position to clean the pool wall, in which the included angle between the orientation of the top of the pool cleaning robot and the vertical direction is maintained at the target angle during the horizontal movement of the pool cleaning robot.

In an aspect, a computer program product or a computer program is further provided. The computer program product or the computer program includes a program code stored in a computer-readable storage medium, and a processor of a robot controller reads the program code from the computer-readable storage medium and executes the program code to cause the robot controller to perform the following steps:
controlling a pool cleaning robot to move to a first position on a pool wall of a pool, in which the first position is a position where a water level line of the pool is located;
controlling the pool cleaning robot to rotate by a first angle to adjust an included angle between an orientation of a top of the pool cleaning robot and a vertical direction to a target angle; and
controlling the pool cleaning robot to move in a horizontal direction starting from the first position to clean the pool wall, in which the included angle between the orientation of the top of the pool cleaning robot and the vertical direction is maintained at the target angle during the horizontal movement of the pool cleaning robot.

### BRIEF DESCRIPTION OF THE DRAWINGS

In order to more clearly explain the technical solution of embodiments of the present disclosure, the accompanying drawings required to be used in the description of embodiments will be briefly described below, and it is obvious that for those skilled in the art, the accompanying drawings described below are only some embodiments of the present application, other accompanying drawings may be obtained according to these accompanying drawings without creative labor.
FIG. 1 is a schematic diagram of a pool cleaning robot on a pool wall according to an embodiment of the present disclosure.
FIG. 2 is a flowchart of a control method for a pool cleaning robot according to an embodiment of the present disclosure.
FIG. 3 is a flowchart of a control method for a pool cleaning robot according to an embodiment of the present disclosure.
FIG. 4 is a schematic diagram of a cleaning route of a pool cleaning robot according to an embodiment of the present disclosure.
FIG. 5 is a schematic diagram of a pool cleaning robot according to an embodiment of the present disclosure.
FIG. 6 is a schematic diagram of a pool cleaning robot rotating by a second angle according to an embodiment of the present disclosure.
FIG. 7 is a schematic diagram of a control device for a pool cleaning robot according to an embodiment of the present disclosure.
FIG. 8 is a schematic diagram of a robot controller according to an embodiment of the present disclosure.

### DETAILED DESCRIPTION

In order to clarify the purpose, technical solution, and advantages of the present disclosure, a further detailed description of embodiments of the present disclosure will be made below in conjunction with the accompanying drawings.

In the present disclosure, terms such as "first" and "second" are used to distinguish similar or identical items that have essentially the same function and role. It should be understood that "first", "second", ..., "nth" do not imply any logical or chronological dependency, nor do they limit the quantity or execution order.

A path planning is one of the main research contents in a motion planning. The motion planning includes the path planning and a trajectory planning. A sequence of points or a curve connecting a starting position and an ending position is referred to as a path, and a strategy for constructing the path is referred to as the path planning. In embodiments of the present disclosure, the path planning for a pool cleaning robot refers to planning a cleaning path of the pool cleaning robot.

The pool cleaning robot refers to a robot configured to clean a pool, in which cleaning the pool includes cleaning a bottom of the pool and cleaning a pool wall of the pool.

In a related art, when the pool cleaning robot is used to clean the pool wall of the pool, there is a lack of a method for cleaning a water level line which is prone to dirt accumulation, resulting in the inability of the pool cleaning robot to effectively clean the pool wall.

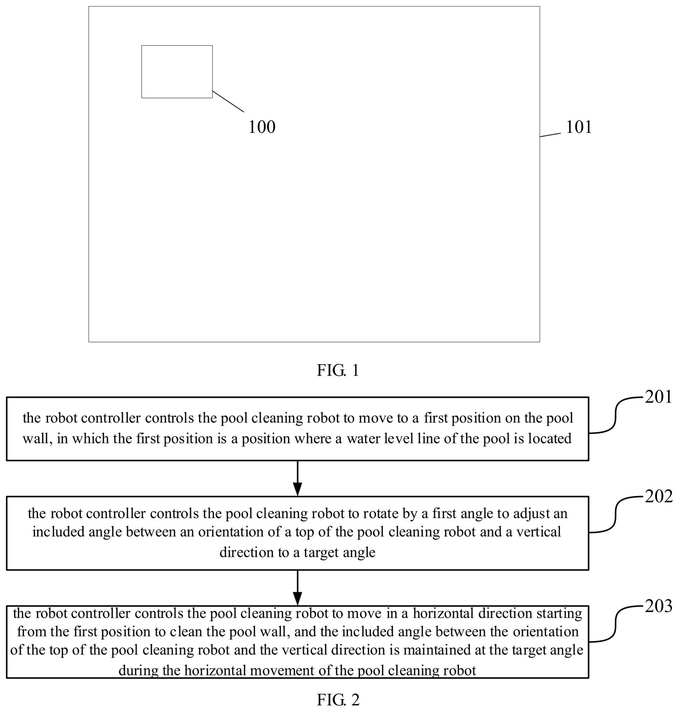

A technical solution provided in embodiments of the present disclosure may be applied in a scenario of controlling the pool cleaning robot to clean the pool wall of the pool. Referring to FIG. 1, a pool cleaning robot 100 has a wall climbing function and may be attachable to a pool wall 101 of a pool. The pool cleaning robot 100 may move on the pool wall 101 of the pool under a control of a robot controller. For example, the pool cleaning robot 100 may move upward along the pool wall 101 of the pool, move downward along the pool wall 101 of the pool, move left or right along the pool wall 101 of the pool, and rotate on the pool wall 101 of the pool. Embodiments of the present disclosure do not limit the movement modes of the pool cleaning robot on the pool wall 101.

The technical solution provided in embodiments of the present disclosure is described below. FIG. 2 is a flowchart of a control method for the pool cleaning robot according to embodiments of the present application. Referring to FIG. 2, and taking the robot controller as an execution subject as an example, the method includes the following steps.

At step 201, the robot controller controls the pool cleaning robot to move to a first position on the pool wall, in which the first position is a position where a water level line of the pool is located.

The pool cleaning robot is attached to the pool wall of the pool and may move on the pool wall of the pool. A bottom of the pool cleaning robot is further provided with a walking unit, and the robot controller may control the pool cleaning robot to move and rotate on the pool wall of the pool by driving the walking unit. Of course, the bottom of the pool cleaning robot is further provided with a cleaning unit, and the cleaning unit enables cleaning of the pool wall of the pool. In some embodiments, the cleaning unit includes a roller brush, and a rotation of the rolling brush enables cleaning of the pool wall. Alternatively, in a case that the cleaning unit does not include the roller brush, a pool cleaning machine uses an internal driving device and a filtering device to filter a pool water and discharge the pool water to achieve cleaning of the pool wall. Of course, the cleaning unit may also simultaneously include the roller brush and a water jet nozzle, which is not limited in embodiments of the present disclosure.

The first position on the pool wall of the pool is a starting position for the pool cleaning robot to clean the pool wall of the pool. The first position being the position where the water level line of the pool is located means that the first position is exactly at the water level line. The pool cleaning robot cleans the pool wall of the pool starting from the first position, that is, the pool cleaning robot cleans the pool wall of the pool starting from the water level line of the pool. That is, when the pool cleaning robot is at the first position, a part of the pool cleaning robot is located above the water level line, and another part of the pool cleaning robot is located below the water level line. In the case that the cleaning unit of the pool cleaning robot includes the roller brush, and when the pool cleaning robot is located at the first position, a part of a body of the pool cleaning robot is located above the water level line, and at the same time, a part of the roller brush is also located above the water level line. Correspondingly, another part of the body of the pool cleaning robot is located below the water level line, and at the same time, another part of the roller brush is also located below the water level line. In this way, it may be ensured that the roller brush cleans the position where the water level line is located. In some embodiments, the pool is a swimming pool.

It should be noted that a cleaning function of the pool cleaning robot may be activated or not activated during moving. The activation of the cleaning function of the pool cleaning robot during moving means that the pool cleaning robot is capable of activating the cleaning function during moving, thereby achieving cleaning of positions passed on the pool wall.

At step 202, the robot controller controls the pool cleaning robot to rotate by a first angle to adjust an included angle between an orientation of a top of the pool cleaning robot and a vertical direction to a target angle.

The orientation of the top of the pool cleaning robot refers to a direction in which a geometric center of the pool cleaning robot points towards the top of the pool cleaning robot.

At step 203, the robot controller controls the pool cleaning robot to move in a horizontal direction starting from the first position to clean the pool wall, and the included angle between the orientation of the top of the pool cleaning robot and the vertical direction is maintained at the target angle during the horizontal movement of the pool cleaning robot.

The robot controller may control the pool cleaning robot to move in the horizontal direction on the pool wall by controlling the walking unit of the pool cleaning robot, thereby achieving cleaning of the position where the water level line is located on the pool wall.

The technical solution provided in the embodiments of the present disclosure may control the pool cleaning robot to clean the position where the water level line is located on the pool wall, control the pool cleaning robot to move to the position where the water level line is located on the pool wall, and then control the pool cleaning robot to rotate by the first angle on the pool wall, so that the included angle between the orientation of the top of the pool cleaning robot and the vertical direction is adjusted to the target angle, that is, the body of the pool cleaning robot is controlled to maintain an angle relative to the water level line. The pool cleaning robot is controlled to move in the horizontal direction starting from the first position, and the angle of the body relative to the water level line is maintained during the horizontal movement, thus achieving cleaning of the pool wall. This cleaning method focuses on cleaning the position where the water level line is located on the pool wall, thereby improving a cleaning effect of the pool cleaning robot on the pool wall.

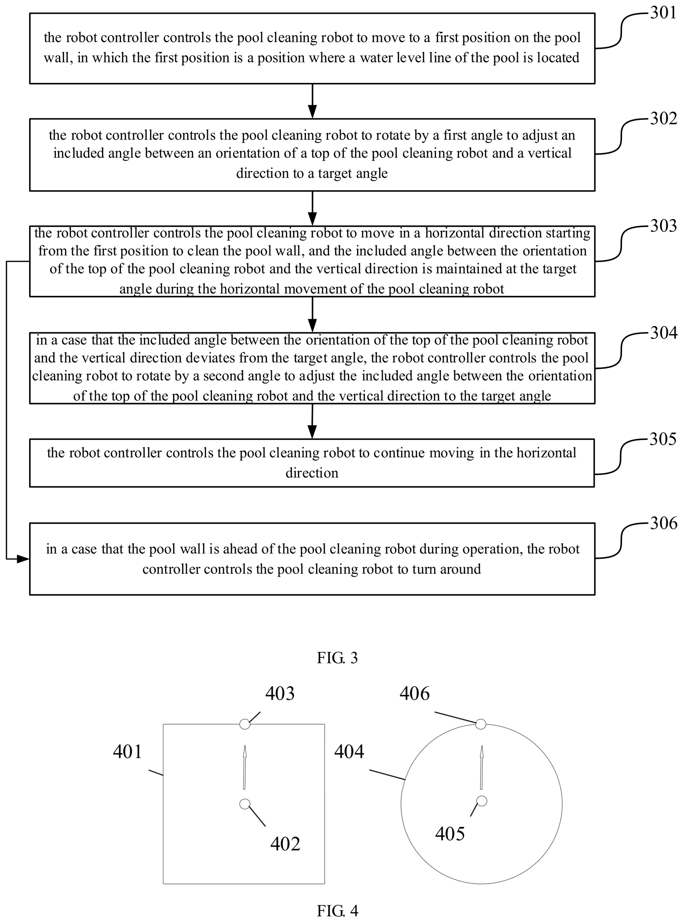

It should be noted that the steps 201-203 described above are a brief introduction to the technical solution provided in the embodiments of the present disclosure. A more detailed explanation of the technical solution provided in the embodiments of the present disclosure will be made below with reference to specific examples and accompanying drawings. As shown in FIG. 3, and taking the robot controller as the execution subject as an example, the method includes the following steps.

At step 301, the robot controller controls the pool cleaning robot to move to a first position on the pool wall, in which the first position is a position where a water level line of the pool is located.

The pool cleaning robot is attached to the pool wall of the pool and may move on the pool wall of the pool. A bottom of the pool cleaning robot is further provided with a walking unit, and the robot controller may control the pool cleaning robot to move and rotate on the pool wall of the pool by driving the walking unit. The water level line refers to an intersection line between a water surface and the pool wall.

Of course, the bottom of the pool cleaning robot is further provided with a cleaning unit, and the cleaning unit enables cleaning of the pool wall of the pool. In some embodiments, the cleaning unit includes a roller brush, and a rotation of the rolling brush enables cleaning of the pool wall. Alternatively, in a case that the cleaning unit does not include the roller brush, a pool cleaning machine uses an internal driving device and a filtering device to filter a pool water and discharge the pool water to achieve cleaning of the pool wall. Of course, the cleaning unit may also simultaneously include the roller brush and a water jet nozzle, which is not limited in embodiments of the present disclosure. The first position on the pool wall of the pool is a starting position for the pool cleaning robot to clean the pool wall of the pool. The first position being the position where the water level line of the pool is located means that the first position is exactly at the water level line. The pool cleaning robot cleans the pool wall of the pool starting from the first position, that is, the pool cleaning robot cleans the pool wall of the pool starting from the water level line of the pool. That is, when the pool cleaning robot is at the first position, a part of the pool cleaning robot is located above the water level line, and another part of the pool cleaning robot is located below the water level line. In the case that the cleaning unit of the pool cleaning robot includes the roller brush, and when the pool cleaning robot is located at the first position, a part of a body of the pool cleaning robot is located above the water level line, and at the same time, a part of the roller brush is also located above the water level line. Correspondingly, another part of the body of the pool cleaning robot is located below the water level line, and at the same time, another part of the roller brush is also located below the water level line. In this way, it may be ensured that the roller brush cleans the position where the water level line is located.

It should be noted that a cleaning function of the pool cleaning robot may be activated or not activated during moving. The activation of the cleaning function of the pool cleaning robot during moving means that the pool cleaning robot is capable of activating the cleaning function during moving, thereby achieving cleaning of the pool wall of the pool.

In some embodiments, the pool cleaning robot further includes a drive unit coupled to the robot controller and the walking unit. The drive unit is controlled by the robot controller and may provide power to the walking unit, so that the pool cleaning robot may move and rotate on the pool wall of the pool through the walking unit. In some embodiments, the walking unit is a wheel.

In some embodiments, the pool cleaning robot is powered by an external power source, which may ensure that the pool cleaning robot may complete tasks when cleaning a large area such as the pool. Alternatively, the pool cleaning robot may be powered by an internal battery, thus eliminating the limitation of connecting wires and enabling it to perform cleaning tasks over a larger area. Alternatively, the pool cleaning robot may be powered by a solar panel, thus reducing an energy cost when using the pool cleaning robot for cleaning. Embodiments of the present disclosure do not limit the power supply method for the pool cleaning robot.

In some embodiments, the pool cleaning robot further includes a gyroscope, and a direction of the pool cleaning robot itself may be determined through the gyroscope.

In some embodiments, the robot controller determines a position of the pool cleaning robot, and this position is configured to indicate a relative positional relationship between the pool cleaning robot and the water level line. In a case that the pool cleaning robot is located below the water level line, the robot controller controls the pool cleaning robot to move upward to the first position. In a case that the pool cleaning robot is located above the water level line, the robot controller controls the pool cleaning robot to move downward to the first position.

In this implementation, when cleaning the pool wall of the pool, the pool cleaning robot may be placed at any position on the pool wall to start cleaning, without the need for users to manually adjust the position of the pool cleaning robot, thus improving a cleaning efficiency of the pool.

To provide a clearer explanation of the above implementation, the following will explain the above implementation in three parts.

In part one, the robot controller determines the position of the pool cleaning robot.

In some embodiments, the robot controller determines a position of the pool cleaning robot on the pool wall through a position sensor.

For example, the pool cleaning robot further includes the position sensor configured to determine whether the pool cleaning robot is below a water surface or above a water surface. For example, the position sensor may be a buoyancy sensor that may detect a buoyancy of water. For example, since a buoyancy of the pool cleaning robot in the air is less than a buoyancy of the pool cleaning robot in water, the robot controller determines that the pool cleaning robot is below the water surface in a case that the robot controller detects that a buoyancy of the pool cleaning robot is greater than a buoyancy threshold through the buoyancy sensor; and the robot controller determines that the pool cleaning robot is located above the water surface in a case that the robot controller detects that the buoyancy of the pool cleaning robot is less than or equal to the buoyancy threshold through the buoyancy sensor.

In part two, in the case that the pool cleaning robot is located below the water level line, the robot controller controls the pool cleaning robot to move upward to the first position.

In some embodiments, in the case that the pool cleaning robot is located below the water level line, the robot controller controls the pool cleaning robot to move upward along the pool wall until the pool cleaning robot reaches the first position. The robot controller controls the pool cleaning robot to move upward along the pool wall until the pool cleaning robot reaches a second position above the water level line, and controls the pool cleaning robot to move downward from the second position to the first position.

The pool cleaning robot is located below the water level line, that is, the pool cleaning robot is located below the water surface. The first position is located directly above the starting position of the pool cleaning robot.

In this implementation, in the case that the pool cleaning robot is located below the water level line, the robot controller may control the pool cleaning robot to move upward along the pool wall, and thus controls the pool cleaning robot to move towards the water surface until the pool cleaning robot reaches the first position.

For example, in the case that the robot controller detects that the pool cleaning robot is located below the water level line through the position sensor, the robot controller determines the direction of the pool cleaning robot through the gyroscope. The robot controller sends a drive command to the drive unit of the pool cleaning robot based on the direction of the pool cleaning robot, and the drive command is configured to instruct the drive unit to drive the walking unit of the pool cleaning robot, so that the pool cleaning robot moves upward along the pool wall. In response to the drive command, the drive unit of the pool cleaning robot controls the pool cleaning robot to move. In a case that the robot controller detects that a part of the pool cleaning robot is exposed above the water surface and another part of the pool cleaning robot remains below the water surface, that is, in a case that the pool cleaning robot covers the water level line, the robot controller sends a drive stop command to the drive unit of the pool cleaning robot, and the drive stop command is configured to instruct the drive unit to stop driving the walking unit, thereby controlling the pool cleaning robot to stop moving. A position where the pool cleaning robot stops is also the first position.

In some embodiments, in the case that the pool cleaning robot is located below the water level line, the robot controller controls the pool cleaning robot to move upward along the pool wall until the pool cleaning robot reaches the second position above the water level line. The robot controller controls the pool cleaning robot to move downward from the second position to the first position.

In this implementation, in the case that the pool cleaning robot is located below the water level line, the robot controller may control the pool cleaning robot to move upward along the pool wall, and retreat to the position where the water level line is located after exceeding the water level line, thereby more accurately controlling the pool cleaning robot to reach the first position.

For example, in a case that the robot controller detects that the pool cleaning robot is located below the water level line through the position sensor, the robot controller determines the direction of the pool cleaning robot through the gyroscope. The robot controller sends a drive command to the drive unit of the pool cleaning robot based on the direction of the pool cleaning robot, and the drive command is configured to instruct the drive unit to drive the walking unit of the pool cleaning robot, so that the pool cleaning robot moves upward along the pool wall. In response to the drive command, the drive unit of the pool cleaning robot controls the pool cleaning robot to move. In a case that the robot controller detects that the pool cleaning robot is completely exposed above the water level line, the robot controller sends the drive stop command to the drive unit of the pool cleaning robot, and the drive stop command is configured to instruct the drive unit to stop driving the walking unit, thus controlling the pool cleaning robot to stop moving. At this time, a position where the pool cleaning robot stops is the second position. The robot controller sends a drive command to the unit of the pool cleaning robot, and the drive command is configured to instruct the drive unit to drive the pool cleaning robot to move in a reverse direction, so that the pool cleaning robot moves toward a position below the water level line. In response to the drive command, the drive unit of the pool cleaning robot controls the pool cleaning robot to move. In the case that the robot controller detects that the part of the pool cleaning robot is exposed above the water surface and the another part of the pool cleaning robot remains below the water surface, the robot controller sends the drive stop command to the drive unit of the pool cleaning robot, and the drive stop command is configured to instruct the drive unit to stop driving the walking unit, thereby controlling the pool cleaning robot to stop moving. A position where the pool cleaning robot stops is also the first position.

In part three, in the case that the pool cleaning robot is located above the water level line, the robot controller controls the pool cleaning robot to move downward to the first position.

In some embodiments, in the case that the pool cleaning robot is located above the water level line, the robot controller controls the pool cleaning robot to move downward along the pool wall until the pool cleaning robot reaches the first position.

In this implementation, in the case that the pool cleaning robot is located above the water level line, the robot controller may control the pool cleaning robot to move downward along the pool wall, and thus controls the pool cleaning robot to move towards the water surface until the pool cleaning robot reaches the first position.

For example, in a case that the robot controller detects that the pool cleaning robot is located above the water level line through the position sensor, the robot controller determines the direction of the pool cleaning robot through the gyroscope. The robot controller sends a drive command to the drive unit of the pool cleaning robot based on the direction of the pool cleaning robot, and the drive command is configured to instruct the drive unit to drive the walking unit of the pool cleaning robot, so that the pool cleaning robot moves downward along the pool wall. In response to the drive command, the drive unit of the pool cleaning robot controls the pool cleaning robot to move. In the case that the robot controller detects that the part of the pool cleaning robot is exposed above the water surface and the another part of the pool cleaning robot is located below the water surface, that is, in the case that the pool cleaning robot covers the water level line, the robot controller sends the drive stop command to the drive unit of the pool cleaning robot, and the drive stop command is configured to instruct the drive unit to stop driving the walking unit, thereby controlling the pool cleaning robot to stop moving. A position where the pool cleaning robot stops is also the first position.

In some embodiments, in the case that the pool cleaning robot is located above the water level line, the robot controller controls the pool cleaning robot to move downward along the pool wall until the pool cleaning robot reaches a third position below the water level line. The robot controller controls the pool cleaning robot to move upward from the third position to the first position.

In this implementation, in the case that the pool cleaning robot is located above the water level line, the robot controller may control the pool cleaning robot to move downward along the pool wall, and retreat to the position where the water level line is located after exceeding the water level line, thereby more accurately controlling the pool cleaning robot to reach the first position.

For example, in a case that the robot controller detects that the pool cleaning robot is located above the water level line through the position sensor, the robot controller determines the direction of the pool cleaning robot through the gyroscope. The robot controller sends a drive command to the drive unit of the pool cleaning robot based on the direction of the pool cleaning robot, and the drive command is configured to instruct the drive unit to drive the walking unit of the pool cleaning robot, so that the pool cleaning robot moves downward along the pool wall. In response to the drive command, the drive unit of the pool cleaning robot controls the pool cleaning robot to move. In the case that the robot controller detects that the pool cleaning robot is completely located at the water level line, the robot controller sends the drive stop command to the drive unit of the pool cleaning robot, and the drive stop command is configured to instruct the drive unit to stop driving the walking unit, thus controlling the pool cleaning robot to stop moving. At this time, a position where the pool cleaning robot stops is the third position. The robot controller sends the drive command to the drive unit of the pool cleaning robot, and the drive command is configured to instruct the drive unit to drive the pool cleaning robot to move in a reverse direction, so that the pool cleaning robot moves toward a position above the water level line. In response to the drive command, the drive unit of the pool cleaning robot controls the pool cleaning robot to move. In the case that the robot controller detects that the part of the pool cleaning robot is exposed above the water surface and the another part of the pool cleaning robot is located below the water surface, the robot controller sends the drive stop command to the drive unit of the pool cleaning robot, and the drive stop command is configured to instruct the drive unit to stop driving the walking unit, thereby controlling the pool cleaning robot to stop moving. A position where the pool cleaning robot stops is also the first position.

At step 302, the robot controller controls the pool cleaning robot to rotate by a first angle to adjust an included angle between an orientation of a top of the pool cleaning robot and a vertical direction to a target angle.

The orientation of the top of the pool cleaning robot refers to a direction in which a geometric center of the pool cleaning robot points towards the top of the pool cleaning robot. As shown in FIG. 4, a direction in which a geometric center 402 of a square pool cleaning robot 401 points towards a top 403 of the square pool cleaning robot 401 is an orientation of the top 403 of the square pool cleaning robot 401. A direction in which a geometric center 405 of a circular pool cleaning robot 404 points towards a top 406 of a circular pool cleaning robot 404 is an orientation of the top 406 of the circular pool cleaning robot 404. The target angle is set by technical personnel according to an actual situation, and a value range of the target angle is (0, 90) or (0, 60), which means that the target angle is less than 90° (degrees) or less than 60°. In some embodiments, the target angle is an angle at which a best cleaning effect on the position where the water level line is located on the pool wall is achieved.

In some embodiments, the robot controller determines the orientation of the top of the pool cleaning robot at the first position. The robot controller determines the first angle based on a first angle difference between the orientation of the top and the vertical direction as well as the target angle. The robot controller controls the pool cleaning robot to rotate by the first angle.

The first angle difference between the orientation of the top and the vertical direction may reflect a degree of deviation between the top of the pool cleaning robot and the vertical direction.

For example, the robot controller determines the orientation of the top of the pool cleaning robot at the first position through the gyroscope. The robot controller determines the first angle between the orientation of the top of the pool cleaning robot and the target angle based on the first angle difference between the orientation of top of the pool cleaning robot and the vertical direction as well as the target angle. The robot controller controls the pool cleaning robot to rotate by the first angle to adjust the included angle between the orientation of the top of the pool cleaning robot and the vertical direction to the target angle. In some embodiments, positive or negative values of the first angle may indicate a rotation direction of the pool cleaning robot. In a case that the first angle is a positive angle, the rotation direction of the pool cleaning robot is clockwise; and in a case that the first angle is a negative angle, the rotation direction of the pool cleaning robot is counterclockwise.

For example, the robot controller determines the orientation of the top of the pool cleaning robot at the first position through the gyroscope. The robot controller determines the first angle between the orientation of the top of the pool cleaning robot and the target angle based on the first angle difference between the orientation of top of the pool cleaning robot and the vertical direction as well as the target angle. The robot controller sends a drive command to the drive unit of the pool cleaning robot, and the drive command is configured to instruct the drive unit to rotate the pool cleaning robot by the first angle. In response to the drive command, the drive unit drives the walking unit of the pool cleaning robot, thereby controlling the pool cleaning robot to rotate by the first angle to adjust the included angle between the orientation of the top of the pool cleaning robot and the vertical direction to the target angle. For example, in a case that the included angle between the orientation of the top of the pool cleaning robot and the vertical direction is 10°, the first angle difference is also 10°. In a case that the target angle is 30°, the first angle may be determined to be 20° based on the first angle difference of 10° and the target angle of 30°, and the robot controller controls the pool cleaning robot to rotate by 20°.

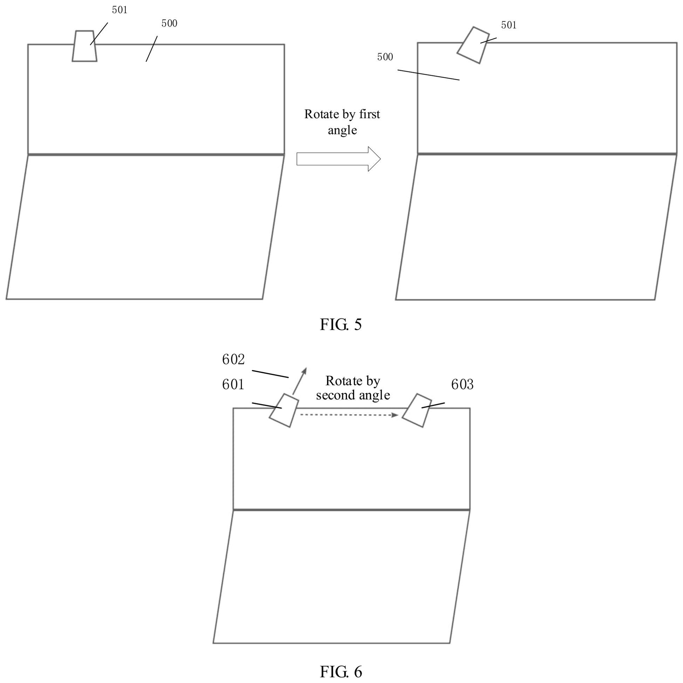

A change process of the above steps 301-302 is shown in FIG. 5. In FIG. 5, a pool cleaning robot 501 is located at the first position of a pool wall 500. The robot controller controls the pool cleaning robot 501 to rotate on the pool wall 500 by the first angle.

At step 303, the robot controller controls the pool cleaning robot to move in a horizontal direction starting from the first position to clean the pool wall, and the angle between the orientation of the top of the pool cleaning robot and the vertical direction is maintained at the target angle during the horizontal movement of the pool cleaning robot.

The robot controller may control the pool cleaning robot to move in the horizontal direction on the pool wall by controlling the walking unit of the pool cleaning robot. During the horizontal movement of the pool cleaning robot, the included angle between the orientation of the top of the pool cleaning robot and the vertical direction remains unchanged. Of course, during the horizontal movement of the pool cleaning, the cleaning function of the pool cleaning robot remains activated, thereby cleaning a position where the pool cleaning robot comes into contact with the pool wall.

In some embodiments, the pool cleaning robot includes at least two drive units, and the robot controller controls the at least two drive units of the pool cleaning robot to simultaneously drive the pool cleaning robot, so that the pool cleaning robot moves in the horizontal direction starting from the first position. Rotation directions and rotation speeds of the at least two drive units are the same.

In this implementation, the robot controller may control the at least two drive units of the pool cleaning robot to rotate at the same speed and in the same direction, thereby maintaining a stable movement of the pool cleaning robot on the pool wall while reducing control costs.

Taking the pool cleaning robot including two drive units as an example, in a case that the included angle between the orientation of the top and the vertical direction of the pool cleaning robot is adjusted to the target angle, the robot controller sends a first drive command and a second drive command to the two drive units of the pool cleaning robot, respectively. The first drive command is configured to drive the first drive unit to drive in a first rotation direction and at a first rotation speed, the second drive command is configured to drive the second drive unit to drive in a second rotation direction and at a second rotation speed, the first rotation direction and the second rotation direction are the same, and the first rotation speed and the second rotation speed are the same. In response to the first drive command and the second drive command, the first drive unit of the pool cleaning robot drives in the first rotation direction and at the first rotation speed, and the second drive unit drives in the second rotation direction and at the second rotation speed, thereby driving the pool cleaning robot to move in the horizontal direction.

For example, in the case that the included angle between the orientation of the top of the pool cleaning robot and the vertical direction is adjusted to the target angle, the robot controller sends a drive command to the drive unit of the pool cleaning robot. In response to the drive command, the two drive units of the pool cleaning robot drive the wheel to rotate, thereby driving the pool cleaning robot to move in the horizontal direction.

In some embodiments, the pool cleaning robot may also automatically avoid an obstacle during moving by using the following method.

In some embodiments, in a case that the pool cleaning robot detects an obstacle, the robot controller controls the pool cleaning robot to avoid the obstacle and return to a target cleaning path, in which the target cleaning path is a path where the pool cleaning robot is located prior to detecting the obstacle.

The pool cleaning robot further includes at least one of a vision sensor or a radar.

For example, in a case that the vision sensor or the radar of the pool cleaning robot detects an obstacle ahead in a moving direction of the pool cleaning robot, the robot controller formulates an obstacle avoidance route for the pool cleaning robot, using algorithms such as a simulated annealing algorithm, an artificial potential field method, a fuzzy logic algorithm, and a taboo search algorithm. The robot controller controls the pool cleaning robot to move along the obstacle avoidance route, so as to avoid the obstacle. In a case that the pool cleaning robot avoids the obstacle, the robot controller controls the pool cleaning robot to return to the target cleaning path and continue cleaning.

In some embodiments, during the robot controller controls the pool cleaning robot to move, the robot controller may also control the pool cleaning robot to perform an oscillating movement laterally about a forward direction, thereby expanding the cleaning range of the pool cleaning robot and improving the cleaning effect on the pool wall.

Optionally, after the step 303, steps 304 and 305 described below may also be performed, or a step 306 described below may be performed, which is not limited by embodiments of the present disclosure.

At step 304, in a case that the included angle between the orientation of the top of the pool cleaning robot and the vertical direction deviates from the target angle, the robot controller controls the pool cleaning robot to rotate by a second angle to adjust the included angle between the orientation of the top of the pool cleaning robot and the vertical direction to the target angle.

The deviation of the included angle between the orientation of the top of the pool cleaning robot and the vertical direction from the target angle may be caused by an interaction between a gravity and a buoyancy.

In some embodiments, in the case that the included angle between the orientation of the top of the pool cleaning robot and the vertical direction deviates from the target angle, the robot controller controls the pool cleaning robot to stop moving. The robot controller determines the second angle based on a second angle difference between the orientation of the top and the vertical direction as well as the target angle. The robot controller controls the pool cleaning robot to rotate by the second angle.

The second angle difference between the orientation of the top and the vertical direction may reflect a degree of deviation between the top of the pool cleaning robot and the vertical direction. The first angle difference and the second angle difference are angle differences at different times.

For example, in the case that the included angle between the orientation of the top of the pool cleaning robot and the vertical direction deviates from the target angle, the robot controller controls the pool cleaning robot to stop moving. The robot controller determines the orientation of the top of the pool cleaning robot at a current position through the gyroscope. The robot controller determines the second angle between the orientation of the top of the pool cleaning robot and the target angle based on the second angle difference between the orientation of top of the pool cleaning robot and the vertical direction as well as the target angle. The robot controller controls the pool cleaning robot to rotate by the second angle to adjust the included angle between the orientation of the top of the pool cleaning robot and the vertical direction to the target angle. In some embodiments, positive or negative values of the second angle may indicate the rotation direction of the pool cleaning robot. In a case that the second angle is a positive angle, the rotation direction of the pool cleaning robot is clockwise; and in a case that the second angle is a negative angle, the rotation direction of the pool cleaning robot is counterclockwise.

For example, in the case that the included angle between the orientation of the top of the pool cleaning robot and the vertical direction deviates from the target angle, the robot controller sends the drive stop command to the drive unit of the pool cleaning robot, and the drive stop command is configured to instruct the drive unit to stop driving the walking unit. In a case that the pool cleaning robot stops moving, the robot controller determines the orientation of the top of the pool cleaning robot at a current position through the gyroscope. The robot controller determines the second angle between the orientation of the top of the pool cleaning robot and the target angle based on the second angle difference between the orientation of top of the pool cleaning robot and the vertical direction as well as the target angle. The robot controller sends a drive command to the drive unit of the pool cleaning robot, and the drive command is configured to instruct the drive unit to rotate the pool cleaning robot by the second angle. In response to the drive command, the drive unit drives the walking unit of the pool cleaning robot, thereby controlling the pool cleaning robot to rotate by the second angle to adjust the included angle between the orientation of the top of the pool cleaning robot and the vertical direction to the target angle. For example, in a case that the included angle between the orientation of the top of the pool cleaning robot and the vertical direction is 25°, the second angle difference is also 25°. In a case that the target angle is 30°, the second angle may be determined to be 5° based on the second angle difference of 25° and the target angle of 30°, and the robot controller controls the pool cleaning robot to rotate by 5°.

Through the step 304, it may be ensured that the included angle between the orientation of the top of the pool cleaning robot and the vertical direction is consistently maintained at the target angle, thereby ensuring the cleaning effect of the pool cleaning robot on the pool wall.

At step 305, the robot controller controls the pool cleaning robot to continue moving in the horizontal direction.

The robot controller may control the pool cleaning robot to move in a horizontal direction on the pool wall by controlling the walking unit of the pool cleaning robot. During the horizontal movement of the pool cleaning robot, the included angle between the orientation of the top of the pool cleaning robot and the vertical direction remains unchanged. Of course, during the horizontal movement of the pool cleaning robot, the cleaning function of the pool cleaning robot remains activated, thereby cleaning the position where the pool cleaning robot comes into contact with the pool wall.

In some embodiments, in the case that the included angle between the orientation of the top of the pool cleaning robot and the vertical direction is adjusted to the target angle, the robot controller sends a drive command to the drive unit of the pool cleaning robot, and the drive command is configured to instruct the drive unit to control the pool cleaning robot to move forward in the horizontal direction. In response to the drive command, the drive unit of the pool cleaning robot drives the pool cleaning robot to continue moving in the horizontal direction.

For example, in the case that the included angle between the orientation of the top of the pool cleaning robot and the vertical direction is adjusted to the target angle, the robot controller sends a drive command to the drive unit of the pool cleaning robot. In response to the drive command, the drive unit of the pool cleaning robot drives the wheel to rotate, thereby driving the pool cleaning robot to continue moving in the horizontal direction.

Effects of the steps 304 and 305 are shown in FIG. 6. In FIG. 6, in a case that the included angle between the orientation 602 of the top of the pool cleaning robot at a current position 601 and the vertical direction deviates from the target angle, the robot controller controls the pool cleaning robot to rotate by the second angle, so that the pool cleaning robot may maintain the included angle between the orientation of the top and the vertical direction at the target angle at a subsequent position 603.

At step 306, in a case that the pool wall is ahead of the pool cleaning robot during operation, the robot controller controls the pool cleaning robot to turn around.

The pool wall being ahead of the pool cleaning robot during operation indicates that the pool cleaning robot has completed a cleaning cycle of the position where the water level line is located on the pool wall. A purpose of the robot controlling the pool cleaning robot to turn around is to return and clean the pool wall again, thereby improving the cleaning effect of the pool cleaning robot on the pool wall.

All optional technical solutions described above may be combined in any manner to form alternative embodiments of the present disclosure, which is not repeated here.

The technical solution provided in the embodiments of the present disclosure may control the pool cleaning robot to clean the position where the water level line is located on the pool wall, control the pool cleaning robot to move to the position where the water level line is located on the pool wall, and then control the pool cleaning robot to rotate by the first angle on the pool wall, so that the angle between the orientation of the top of the pool cleaning robot and the vertical direction is adjusted to the target angle, that is, the body of the pool cleaning robot is controlled to maintain the angle relative to the water level line. The pool cleaning robot is controlled to move horizontally starting from the first position, and the angle of the body relative to the water level line is maintained during the horizontal movement, thus achieving cleaning of the pool wall. This cleaning method focuses on cleaning the position where the water level line is located on the pool wall, thereby improving the cleaning effect of the pool cleaning robot on the pool wall.

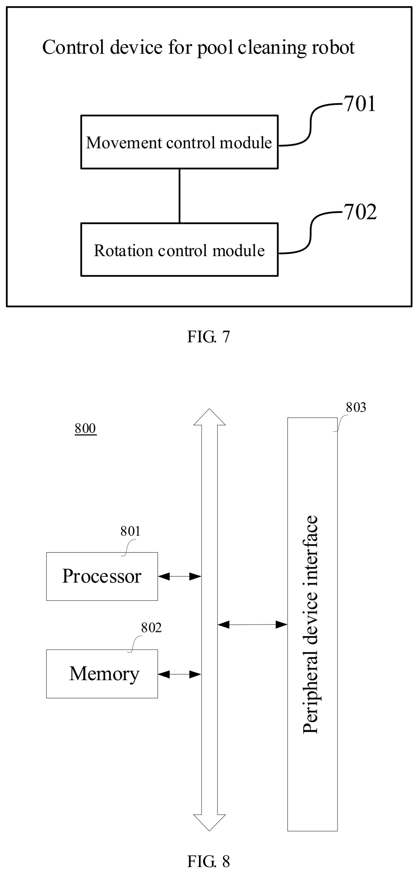

FIG. 7 is a schematic diagram of a control device for the pool cleaning robot according to an embodiment of the present disclosure. Referring to FIG. 7, the device includes a movement control module 701 and a rotation control module 702.

The movement control module 701 is configured to control the pool cleaning robot to move to a first position on a pool wall of a pool, in which the first position is a position where a water level line of the pool is located.

The rotation control module 702 is configured to control the pool cleaning robot to rotate by a first angle to adjust an included angle between an orientation of a top of the pool cleaning robot and a vertical direction to a target angle.

The movement control module 701 is further configured to control the pool cleaning robot to move in a horizontal direction starting from the first position to clean the pool wall, and the included angle between the orientation of the top of the pool cleaning robot and the vertical direction is maintained at the target angle during the horizontal movement of the pool cleaning robot.

In some embodiments, the movement control module 701 is configured to determine a position of the pool cleaning robot, in which this position is used to indicate a relative positional relationship between the pool cleaning robot and the water level line. In a case that the pool cleaning robot is located below the water level line, the pool cleaning robot is controlled to move upward to the first position. In a case that the pool cleaning robot is located above the water level line, the pool cleaning robot is controlled to move downward to the first position.

In some embodiments, the movement control module 701 is configured to perform any one of the following.

The pool cleaning robot is controlled to move downward along the pool wall until the pool cleaning robot reaches the first position.

The pool cleaning robot is controlled to move upward along the pool wall until the pool cleaning robot moves to a second position above the water level line. The pool cleaning robot is controlled to move downward from the second position to the first position.

In some embodiments, the movement control module 701 is configured to perform any one of the following.

The pool cleaning robot is controlled to move downward along the pool wall until the pool cleaning robot reaches the first position.

The pool cleaning robot is controlled to move downward along the pool wall until the pool cleaning robot moves to a third position below the water level line. The pool cleaning robot is controlled to move upward from the third position to the first position.

In some embodiments, the rotation control module 702 is configured to determine the orientation of the top of the pool cleaning robot at the first position. The first angle is determined based on a first angle difference between the orientation of the top and the vertical direction as well as the target angle. The pool cleaning robot is controlled to rotate by the first angle.

In some embodiments, the pool cleaning robot includes at least two drive units, and the movement control module 701 is further configured to control the at least two drive units of the pool cleaning robot to simultaneously drive the pool cleaning robot, so that the pool cleaning robot moves in the horizontal direction starting from the first position. Rotation directions and rotation speeds of the at least two drive units are the same.

In some embodiments, the rotation control module 702 is further configured to control the pool cleaning robot to rotate by a second angle to adjust the included angle between the orientation of the top of the pool cleaning robot and the vertical direction to the target angle, in a case that the included angle between the orientation of the top of the pool cleaning robot and the vertical direction deviates from the target angle.

The movement control module 701 is further configured to control the pool cleaning robot to continue moving in the horizontal direction.

In some embodiments, the rotation control module 702 is further configured to control the pool cleaning robot to stop moving. The second angle is determined based on a second angle difference between the orientation of the top and the vertical direction as well as the target angle. The pool cleaning robot is controlled to rotate by the second angle.

In some embodiments, the device further includes:
an obstacle avoidance module configured to control the pool cleaning robot to avoid the obstacle and return to a target cleaning path when the pool cleaning robot detects an obstacle, in which the target cleaning path is a path where the pool cleaning robot is located prior to detecting the obstacle.

It should be noted that, in controlling the pool cleaning robot, the control device of the pool cleaning robot provided in the above embodiments exemplifies functional partitioning solely for illustrative purposes. In practical applications, the above functions may be allocated to different functional modules as required, that is, the internal structure of the robot controller may be partitioned into distinct functional modules to perform all or part of the functions described above. In addition, the control device for the pool cleaning robot provided in the above embodiments belongs to the same concept as the embodiments of the control method for the pool cleaning robot. The specific implementation process is detailed in the method embodiments and thus will not be repeated here.

The technical solution provided in the embodiments of the present disclosure may control the pool cleaning robot to clean the position where the water level line is located on the pool wall, control the pool cleaning robot to move to the position where the water level line is located on the pool wall, and then control the pool cleaning robot to rotate by the first angle on the pool wall, so that the angle between the orientation of the top of the pool cleaning robot and the vertical direction is adjusted to the target angle, that is, the body of the pool cleaning robot is controlled to maintain an angle relative to the water level line. The pool cleaning robot is controlled to move horizontally starting from the first position, and the angle of the body relative to the water level line is maintained during the horizontal movement, thus achieving cleaning of the pool wall. This cleaning method focuses on cleaning the position where the water level line is located on the pool wall, thereby improving the cleaning effect of the pool cleaning robot on the pool wall.

Embodiments of the present disclosure further provide a pool cleaning robot including a robot controller. FIG. 8 is a schematic diagram of the robot controller according to an embodiment of the present disclosure. A robot controller 800 may be a smartphone, a tablet computer, a laptop, or a desktop computer.

Typically, the robot controller 800 includes one or more processors 801 and one or more memories 802.

The processors 801 may include one or more processing cores, e.g., a 4-core processor, an 8-core processor. The processor 801 may be implemented using at least one hardware form from Digital Signal Processing (DSP), Field Programmable Gate Array (FPGA), or Programmable Logic Array (PLA). The processor 801 may also include a main processor and a coprocessor. The main processor is a processor configured to process data in an active state, also known as a Central Processing Unit (CPU); and
the coprocessor is a low-power processor configured to process data in a standby state. In some embodiments, the processor 801 may be integrated with a Graphics Processing Unit (GPU) configured to render and draw a content required to be displayed on a screen. In some embodiments, the processor 801 may also include an Artificial Intelligence (AI) processor configured to process computational operations related to machine learning.

The memory 802 may include one or more computer-readable storage media, which may be non-transitory computer-readable storage media. The memory 802 may also include a high-speed random-access memory, as well as a non-volatile memory, such as one or more disk storage devices, flash storage devices. In some embodiments, the non-transitory computer-readable storage media in the memory 802 are configured to store at least one computer program executable by the processor 801 to implement the control method for the pool cleaning robot provided in the method embodiments of the present disclosure.

In some embodiments, the robot controller 800 may optionally include a peripheral device interface 803 and at least one peripheral device. The processor 801, the memory 802, and the peripheral device interface 803 may be coupled through buses or signal lines. Various peripheral devices may be coupled to the peripheral device interface 803 through buses, signal lines, or circuit boards.

Those who skilled in the art may understand that the structure shown in FIG. 8 does not constitute a limitation on the robot controller 800, which may include more/fewer components than shown in the diagram, or combine certain components, or adopt different component arrangements.

In an exemplary embodiment, a non-temporary computer-readable storage medium is further provided, such as a memory including a computer program executable by a processor to perform the control method for the pool cleaning robot in the above embodiments. For example, the computer-readable storage medium may be such as a Read-Only Memory (ROM), a Random Access Memory (RAM), a Compact Disc Read-Only Memory (CD-ROM), a magnetic tape, a floppy disk, or an optical data storage device.

In an exemplary embodiment, a computer program product or a computer program is further provided. The computer program product or the computer program includes a program code stored in a computer-readable storage medium, a processor of a robot controller reads the program code from the computer-readable storage medium and executes the program code, so that the robot controller executes the control method for the pool cleaning robot described above.

In some embodiments, the computer program involved in embodiments of the present disclosure may be deployed to be executed on one robot controller, or on a plurality of robot controllers located in one location, or on a plurality of robot controllers distributed in a plurality of locations and interconnected through a communication network. The plurality of robot controllers distributed in the plurality of locations and interconnected through the communication network may form a blockchain system.

Those who skilled in the art may understand that all or part of the steps to implement the above embodiments may be implemented through hardware, or through program-instructed hardware. Such program may be stored in a computer-readable storage medium, such as a ROM, a magnetic disk, or an optical disk.

The above embodiments are only optional embodiments of the present disclosure and are not intended to limit the present disclosure. Any modifications, equivalent substitutions, or improvements made within the spirit and principles of the present disclosure shall fall within the protection scope of the present disclosure.

## Claims

1. A control method for a pool cleaning robot, comprising:
controlling the pool cleaning robot to move to a first position on a pool wall of a pool, wherein the first position is a position where a water level line of the pool is located;
controlling the pool cleaning robot to rotate by a first angle to adjust an included angle between an orientation of a top of the pool cleaning robot and a vertical direction to a target angle; and
controlling the pool cleaning robot to move in a horizontal direction starting from the first position to clean the pool wall, wherein the included angle between the orientation of the top of the pool cleaning robot and the vertical direction is maintained at the target angle during the horizontal movement of the pool cleaning robot.

2. The method according to claim 1, wherein controlling the pool cleaning robot to move to the first position on the pool wall of the pool comprises:
determining a position of the pool cleaning robot, wherein the position is configured to indicate a relative positional relationship between the pool cleaning robot and the water level line;
in a case that the pool cleaning robot is located below the water level line, controlling the pool cleaning robot to move upward to the first position; and
in a case that the pool cleaning robot is located above the water level line, controlling the pool cleaning robot to move downward to the first position.

3. The method according to claim 2, wherein controlling the pool cleaning robot to move upward to the first position comprises any one of:
controlling the pool cleaning robot to move upward along the pool wall until the pool cleaning robot reaches the first position; or
controlling the pool cleaning robot to move upward along the pool wall until the pool cleaning robot moves to a second position above the water level line, and controlling the pool cleaning robot to move downward from the second position to the first position.

4. The method according to claim 2, wherein controlling the pool cleaning robot to move downward to the first position comprises any one of:
controlling the pool cleaning robot to move downward along the pool wall until the pool cleaning robot reaches the first position; or
controlling the pool cleaning robot to move downward along the pool wall until the pool cleaning robot moves to a third position below the water level line, and controlling the pool cleaning robot to move upward from the third position to the first position.

5. The method according to claim 1, wherein controlling the pool cleaning robot to rotate by the first angle comprises:
determining the orientation of the top of the pool cleaning robot when the pool cleaning robot is at the first position;
determining the first angle based on a first angle difference between the orientation of the top and the vertical direction as well as the target angle; and
controlling the pool cleaning robot to rotate by the first angle.

6. The method according to claim 1, wherein the pool cleaning robot comprises at least two drive units, and controlling the pool cleaning robot to move in the horizontal direction starting from the first position comprises:
controlling the at least two drive units of the pool cleaning robot to simultaneously drive the pool cleaning robot, so that the pool cleaning robot moves in the horizontal direction starting from the first position, wherein rotation directions and rotation speeds of the at least two drive units are the same.

7. The method according to claim 1, wherein after controlling the pool cleaning robot to move in the horizontal direction starting from the first position, the method further comprises:
in a case that the included angle between the orientation of the top of the pool cleaning robot and the vertical direction deviates from the target angle, controlling the pool cleaning robot to rotate by a second angle to adjust the angle between the orientation of the top of the pool cleaning robot and the vertical direction to the target angle; and
controlling the pool cleaning robot to continue moving in the horizontal direction.

8. The method according to claim 7, wherein controlling the pool cleaning robot to rotate by the second angle comprises:
controlling the pool cleaning robot to stop moving;
determining the second angle based on a second angle difference between the orientation of the top and the vertical direction as well as the target angle; and
controlling the pool cleaning robot to rotate by the second angle.

9. The method according to claim 8, wherein the target angle is 90 degrees or 60 degrees.

10. The method according to claim 1, further comprising:
in a case that the pool wall is ahead of the pool cleaning robot during operation, controlling the pool cleaning robot to turn around.

11. The method according to claim 1, further comprising:
in a case that the pool cleaning robot detects an obstacle, controlling the pool cleaning robot to avoid the obstacle and return to a target cleaning path, wherein the target cleaning path is a path where the pool cleaning robot is located prior to detecting the obstacle.

12. The method according to claim 1, further comprising:
in a process of controlling the pool cleaning robot to move, controlling the pool cleaning robot to perform an oscillating movement laterally about a forward direction, so as to expand a cleaning range of the pool cleaning robot.

13. A control device for a pool cleaning robot, comprising:
a movement control module configured to control the pool cleaning robot to move to a first position on a pool wall of a pool, wherein the first position is a position where a water level line of the pool is located; and
a rotation control module configured to control the pool cleaning robot to rotate by a first angle to adjust an included angle between an orientation of a top of the pool cleaning robot and a vertical direction to a target angle,
wherein the movement control module is further configured to control the pool cleaning robot to move in a horizontal direction starting from the first position to clean the pool wall, and the included angle between the orientation of the top of the pool cleaning robot and the vertical direction is maintained at the target angle during the horizontal movement of the pool cleaning robot.

14. A pool cleaning robot, comprising a robot controller, wherein the robot controller comprises one or more processors and one or more memories, the one or more memories store at least one computer program, the at least one computer program is loaded by the one or more processors to execute following steps:
controlling the pool cleaning robot to move to a first position on a pool wall of a pool, wherein the first position is a position where a water level line of the pool is located;
controlling the pool cleaning robot to rotate by a first angle to adjust an included angle between an orientation of a top of the pool cleaning robot and a vertical direction to a target angle; and
controlling the pool cleaning robot to move in a horizontal direction starting from the first position to clean the pool wall, wherein the included angle between the orientation of the top of the pool cleaning robot and the vertical direction is maintained at the target angle during the horizontal movement of the pool cleaning robot.

15. A computer-readable storage medium, storing at least one computer program, wherein the at least one computer program is loaded by a processor to execute following steps:
controlling a pool cleaning robot to move to a first position on a pool wall of a pool, wherein the first position is a position where a water level line of the pool is located;
controlling the pool cleaning robot to rotate by a first angle to adjust an included angle between an orientation of a top of the pool cleaning robot and a vertical direction to a target angle; and
controlling the pool cleaning robot to move in a horizontal direction starting from the first position to clean the pool wall, wherein the included angle between the orientation of the top of the pool cleaning robot and the vertical direction is maintained at the target angle during the horizontal movement of the pool cleaning robot.
